# EUROPÄISCHE PATENTSCHRIFT

(11) **EP 2 430 899 B1**
(45) Veröffentlichungstag und Bekanntmachung des Hinweises auf die Patenterteilung: **05.06.2013**
(21) Anmeldenummer: 11004712.3
(22) Anmeldetag: 09.06.2011
(51) Int. Cl.: A01D 34/82, A01D 34/86

(54) **Abweisvorrichtung für Kreiselmähwerk**
Rejection device for rotary mower
Dispositif de rejet pour faucheuse rotative

(30) Priorität: 21.09.2010 DE 202010012789 U
(43) Veröffentlichungstag der Anmeldung: 21.03.2012
(73) Patentinhaber: CLAAS Saulgau GmbH, 88348 Bad Saulgau (DE)
(72) Erfinder: Epp, Siegfried, 88436 Eberhardzell (DE)

(56) Entgegenhaltungen:
- CH-A5- 657 247
- US-A- 5 727 371
- US-A- 5 761 890
- US-A1- 2004 020 060

## Beschreibung

Die Erfindung betrifft ein Krelselmähwerk, das es dem Bedienpersonal bzw. dem Schlepperfahrer ermöglicht die Außenkontur der zu bearbeitenden Agrarfläche annähernd ohne Verlust an Erntegut zu Mähen gemäß dem Oberbegriff des unabhängigen Anspruchs 1.

### Stand der Technik

Bekannt sind Schutzvorrichtungen die vornehmlich dem Schutz von Personen dienen und den unmittelbaren Gefahrenbereich der Einrichtung entsprechend den hierfür vorgesehenen CE-Richtlinien vor dem ungewollten Eingriff schützen. Erreicht wird dies durch großflächige Abdeckungen der unmittelbaren Gefahrenquelle. Entsprechend den v.g. CE-Richtlinien sind hierbei vorgegebene Mindestabstände von Drehtellen zu der jeweiligen Schutzeinrichtung vorgegeben und zwingend einzuhalten. Beim Befahren der Kontur einer Agrarfläche ist somit eine reduzierte Arbeitsbreite des Mähwerkes nicht zu verhindern.

US 2004/0020060 A1 offenbart einen Rasentrimmer mit einer geteilten Abdeckhaube. CH 657 247 A5 betrifft eine Mähmaschine mit einem Tierschutzgerät, welches als seitlich abstehender, über das Gras streifender, Schwenkarm ausgeführt ist. Der Schwenkarm ist gelenkig an einer Konsole an der Mähmaschine befestigt und wird durch eine Feder in seiner Arbeitslage gehalten.

### Aufgabenstellung

Aufgabe der Erfindung ist es daher, eine Vorrichtung zu schaffen die es dem Bedienpersonal des Mähwerkes ermöglicht, während des Fahrbetriebes eine möglichst schonende und schnelle Annäherung des Mähwerkes inkl. Schutzeinrichtung an ein an der Außenkontur der Agrarfläche gelegenem Hindernis zu ermöglichen. Als Hindernis sind in diesem Zusammenhang natürliche Hindernisse wie zum Beispiel Bäume und Hecken als auch unnatürliche wie Mauern und Zäune zu nennen.

Hier setzt die Aufgabe der Erfindung an mit dem Ziel, eine möglichst zeitnahe Annäherung des Mähwerkes inkl. Schutzeinrichtung an die Außenkontur der Agrarfläche zu erreichen ohne dabei die Schutzeinrichtung zu beschädigen.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht zumindest an der außenliegenden Seite eines Kreiselmähwerkes einen Schutzbügel vor. Die Befestigungspunkte des Abweisbügels sind flexibel gelagert um Beschädigungen an der Schutzeinrichtung zu verhindern.

### Ausführungsbeispiel

Nachfolgend wird anhand eines Ausführungsbeispiel eines Frontmähwerkes die Erfindung näher beschrieben:

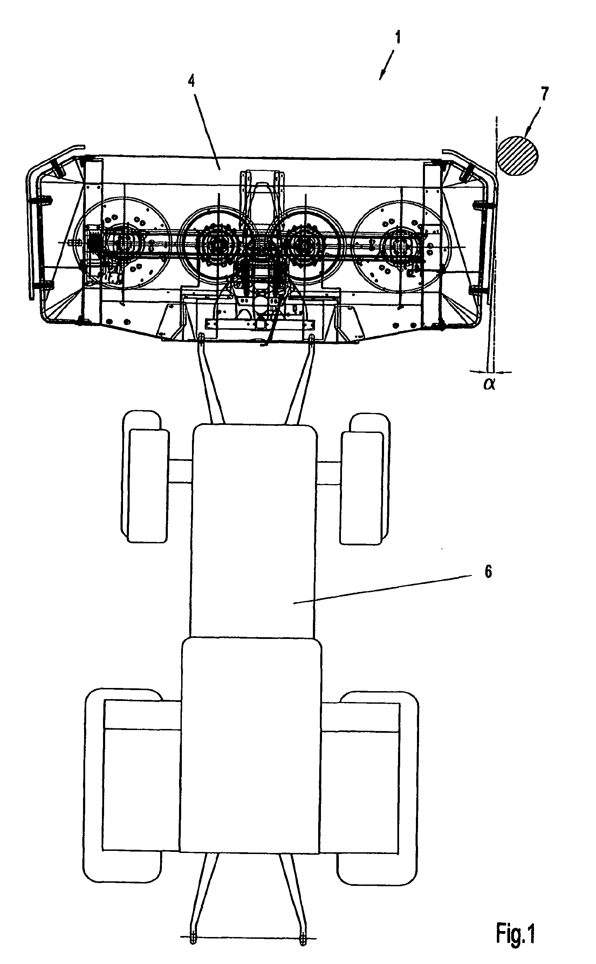

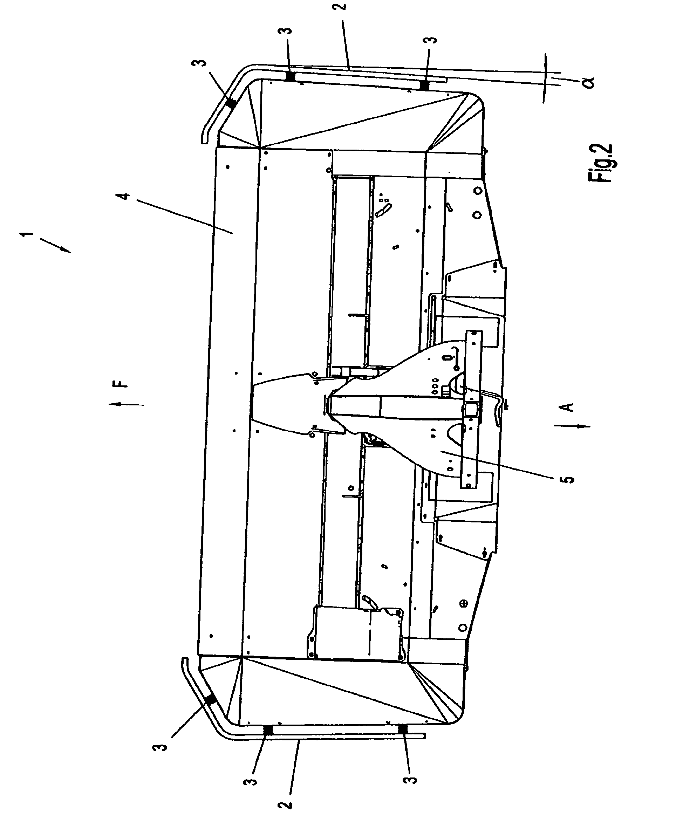

Figur 1 zeigt ein Kreiselmähwerk (1) ausgeführt als Frontmähwerk angekoppelt an einen Traktor (6) in einer Draufsicht auf eine Arbeitsebene.

Die Mähscheiben (7) des Frontmähwerk (1) sind von einer Schutzabdeckung (4) gemäß den Sicherheitsvorschriften der DIN EN ISO 425412 abgedeckt.

Die Seiten der Schutzabdeckung tragen an Federelementen befestigte Schutzbügel (2).

Die Fahrtrichtung des Mähwerkes ist durch den Fahrtrichtungspfeil (F) definiert. Nähert sich das Mähwerk einem Hindernis (7) zum Bsp. einem Zaunpfahl so ist der Fahrer bemüht, möglichst nah an dem Hindernis entlang zu mähen. Berührt er nun das Hindernis (7) mit dem Schutzbügel (2) so kann der Schutzbügel auf Grund der Federelemente (2) den Anfahrstoß mildern, um somit einen Deformationsschaden an der Schutzabdeckung zu vermeiden. Die Federelemente können sowohl als Stahlfeder als auch als Elastomere Federelemente ausgeführt sein. Diese Federelemente (3) die vorzugsweise als Rohr ausgeführt sind fixieren diesen in seiner neutralen das heißt unbelasteten Lage. Durch diese Art der Ausgestaltung der elastischen Ankopplung an die Schutzabdeckung (4) kann der Schutzbügel bei Kontakt mit einem Hindernis in alle drei Ebenen ausweichen.

Ein weiterer Vorteil der Erfindung besteht darin, das der Schutzbügel so ausgebildet ist, das er sich beim kontaktieren des Hindernisses frei arbeiten kann. Dieses wird dadurch erreicht, das der Schutzbügel mit dem Winkel (α) gegenüber der Fahrtrichtung einen divergierenden Verlauf einnimmt. Dadurch vermindert sich die Anpresskraft des Schutzbügels an die Schutzeinrichtung bei fortlaufender Fahrbewegung.

Die Erfindung ist keineswegs auf Frontmähwerke beschränkt sondern sie ist ebenfalls auf angebaute, gezogenen oder aufgesattelte Kreiselmähwerke anwendbar.

### Bezugszeichenliste

- 1: Kreiselmähwerk
- 2: Seitlicher Schutzbügel
- 3: Federelemente
- 4: Schutzreinrichtung
- 5: Kupplungsgehäuse
- 6: Traktor
- 7: Hindernis
- F: Fahrbewegung in Fahrtrichtung
- A: Fahrbewegung entgegen der Fahrtrichtung

## Patentansprüche

1. Kreiselmähwerk (1) mit einer Schutzabdeckung (4) und einem Schutzbügel (2) als Abweisvorrichtung beim Anfahren von Hindernissen zur Vermeidung von Deformationsschäden an der Schutzabdeckung (4), **dadurch gekennzeichnet, dass** der Schutzbügel (2) über elastische Federelemente (3) mit der Schutzabdeckung (4) verbunden ist.

2. Kreiselmähwerk nach Anspruch 1, **dadurch gekennzeichnet, dass** der Schutzbügel (2) an Seitenteilen der Schutzabdeckung (4) in Fahrtrichtung (F) des Kreiselmähwerkes in einem divergierendem Winkel (α) weiter ausgestellt ist, als an dem entgegen der Fahrtrichtung (A) liegendem Ende des Kupplungsgehäuses (6).

3. Kreiselmähwerk nach Anspruch 1, **dadurch gekennzeichnet, dass** die elastischen Federelemente (3) Spiralfedern sind.

4. Kreiselmähwerk nach Anspruch 1, **dadurch gekennzeichnet, dass** die elastischen Federelemente (3) Polymerfedern sind.

## Claims

1. A rotary mower (1) comprising a protective cover (4) and a protective bar (2) as a repulsion device when encountering obstacles for preventing deformation damage to the protective cover (4), **characterised in that** the protective bar (2) is connected to the protective cover (4) by way of elastic spring elements (3).

2. A rotary mower according to claim 1 **characterised In that** at side portions of the protective cover (4) in the direction of travel (F) of the rotary mower the protective bar (2) is set out at a divergent angle (α) further than at the end opposite to the direction of travel (F) of the coupling housing (6).

3. A rotary mower according to claim 1 **characterised In that** elastic spring elements (3) are coil springs.

4. A rotary mower according to claim 1 **characterised In that** the elastic spring elements (3) are polymer springs.

## Revendications

1. Faucheuse rotative (1) munie d'un carter de protection (4) et d'un arceau de protection (2) servant de dispositif de déflexion en cas de collusion avec des obstacles afin d'éviter des dégâts par déformation sur le carter de protection (4), **caractérisée en ce que** l'arceau de protection (2) est relié au carter de protection (4) par l'intermédiaire d'éléments à ressort élastiques (3) .

2. Faucheuse rotative selon la revendication 1, **caractérisée en ce que**, sur les éléments latéraux du carter de protection (4), l'arceau de protection (2) est plus ouvert d'un angle divergent (α), dans la direction de marche (F) de la faucheuse rotative, qu'à l'extrémité du carter d'accouplement (6) située à l'opposé de la direction de marche (A).

3. Faucheuse rotative selon la revendication 1, **caractérisée en ce que** les éléments à ressort élastiques (3) sont des ressorts spiraux.

4. Faucheuse rotative selon la revendication 1, **caractérisée en ce que** les éléments à ressort élastiques (3) sont des ressorts polymères.
